# EUROPEAN PATENT SPECIFICATION

(11) **EP 1 184 238 B1**
(45) Date of publication and mention of the grant of the patent: **19.04.2006**
(21) Application number: 01300889.1
(22) Date of filing: 31.01.2001
(51) Int. Cl.: B60S 1/40

(54) **Connecting piece for connecting a wiper blade to a wiper arm**
Verbindungsstück zum Verbinden eines Wischblatts mit einem Wischerarm
Pièce de liaison pour assembler une raclette d'essuie-glace et un bras d'essuie-glace

(30) Priority: 04.09.2000 BR 8001932 U
(43) Date of publication of application: 06.03.2002
(73) Proprietor: Eletromecânica Dyna S/A, Guarulhos, SP (BR)
(72) Inventor: Nacamuli, Marc, Sao Paulo- SP (BR)
(74) Representative: Abbie, Andrew Kenneth

(56) References cited:
- FR-A- 2 631 299
- US-A- 5 632 059
- US-A- 5 937 474

## Description

The present invention relates to a windscreen wiper arm coupling element. The present invention reveals an arm coupling element for windscreen wiper that solves the problem entailed by the multiplicity of fastening device coupling elements and arms.

The main object of the present invention is to provide a 'universal' device that allows the installation by the user, in a simple, easy and quick way.

The coupling elements of the current state of the art systems present a multiplicity of forms, each one specifically designed to allow the fastening of a certain type of coupling element to a certain type of arm.

The current state of the art presents some endeavors towards the universalization of the arm coupling element for a windscreen wiper, as for example the present applicant's Brazilian Patent Application MU 8000354-0, which nevertheless presents some of the inconveniences described herein below.

The current state of the art presents some inconveniences.

The lack of a market standard in the auto-parts market forces the manufacturers of arm coupling elements for windscreen wipers to produce a wide variety of specific models for their coupling elements. That generates several inconveniences such as logistical problems, the need for larger stocks and higher manufacturing costs.

The configuration of current arm coupling elements for windscreen wipers makes for a difficult mounting of the wiper on the arm, requiring the use of force to lock-up the connection between the system components. An imprecise use of force upon an element that is sensitive to deformation creates a risk of damage/distortion that could eventually hamper the system's performance.

Another negative aspect, specially in those cases in which the locking between the wiper and the arm is based on a system known by those skilled in the art by the name of side-lock, is that the assembly of the device by the user requires a certain level of skill, both to assemble and disassemble it.

The rotation of the wiper's arc is paramount for the system's performance, because this movement compensates the variation of the relative positioning between the wiper's arm and the external face of the windshield. In some of the current devices, such as that disclosed in the present applicant's Brazilian Patent Application MU 8000354-0, at least one of the elements employed to stabilize the coupling between the wiper and the coupling element interferes with the rotation movement of the wiper's arc, harming the system's performance.

US 5937474 discloses a windscreen wiper to arm coupling element, comprising a main body, a plurality of transversal coupling bores of different dimensions on a central area of said main body wherein a lower part of each lateral wall of the body is cut away allowing direct access to said transversal coupling bores, four lateral bulges located one at each end of each of said lateral walls and two moving locking bulges located at one end of the main body for receiving a windscreen wiper's arm hook in use.

The present invention comprises a windscreen wiper arm coupling element as defined in the last preceding paragraph characterised in that said plurality of transversal coupling bores comprises three bores, in that two flexible adjusting pawls are located transversely on an upper part of the main body, in that a slack reducing moving part is located at said one end of the main body for reducing slack between the windscreen wiper's arm hook and the rest of said element in use and in that two transversal slots are provided adjacent to a central one of said bores.

It will be appreciated that the same coupling element can be used on systems having an arm with hook-shaped ends of 9x4, 9x3 or 8x3 and also on side-lock coupling systems of 1/4" (6.35 mm) or 3/16" (4.76 mm). Contemplated is a single coupling element that is compatible with 5 different types of coupling between wiper and arm, by means of a system that comprises 2 lateral pawls and 3 transversal bores.

For a better understanding of the invention, an embodiment thereof, which is given by way of example only, will now be described with reference to the accompanying drawings, in which:

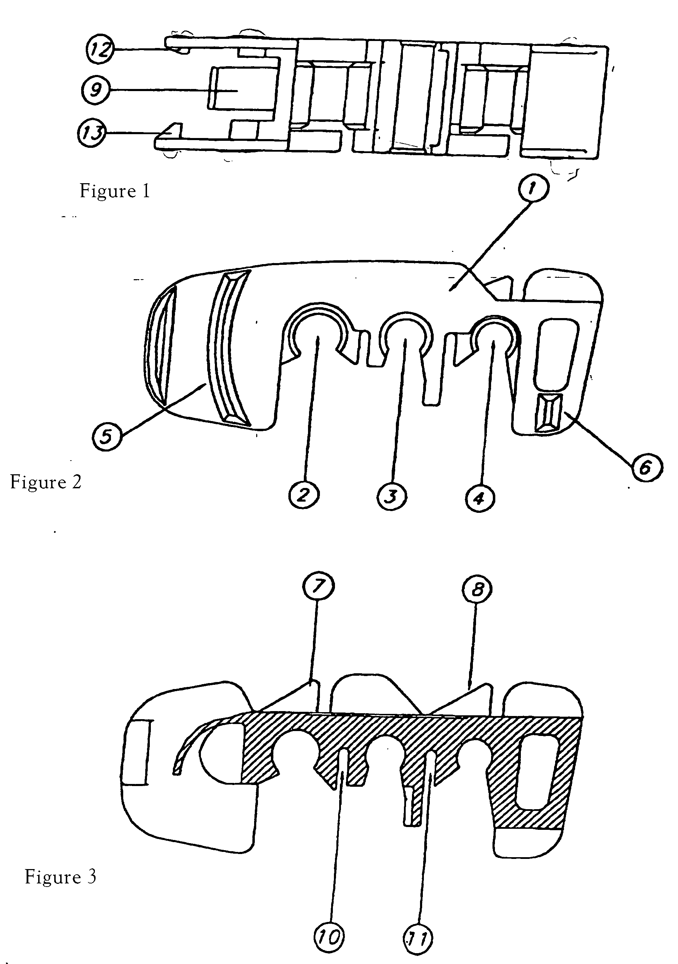

Figure 1 is an underneath plan view of a windscreen wiper arm coupling element;
Figure 2 is a front view of the same element;
Figure 3 is a lateral cross section view of the same element;
Figure 4 depicts the assembly of an arm with a hook-shaped end; and
Figure 5 depicts the assembly of the 1/4" (6.35 mm) side-lock coupling.

According to the figures indicated above, the coupling element comprises a main body 1 featuring three transversal bores 2, 3 and 4, used respectively for the coupling of the 1/4" (6.35 mm) side-lock pin, the wiper's central pin and the 3/16" (4.76 mm) side-lock pin.

To couple the arm 101 with a 8x3 hook on its end, two lateral pawls 7 and 8 are designed to provide a perfect adjustment of the arm's hook with its corresponding coupling element.

With the purpose of ensuring an easy side-lock coupling, the bores 2 and 4 of the coupling element alternatively present guiding chamfers to guide such coupling.

For the coupling between the coupling element and the arm ends equipped with 9x4 or 9x3 hooks, the two lateral pawls 7 and 8 are flexed, opening space to accommodate the arm 101 end hook between the side walls of the coupling element. Further, located at the end of the main body is a moving claw 9. The function of the claw 9 is to eliminate any possible slack between the rest of the coupling element and the arm 101 end hook.

The element also features two transversal slots 10 and 11 adjacent to the central bore 3, designed to add higher flexibility to the system, ensuring the easiness of assembly of the coupling element to the wiper's central pin and also the assembly of the pins on the side-lock coupling.

There are also two bulges 12 and 13 which purpose is to avoid the undesired disassembly of the system during it's operation.

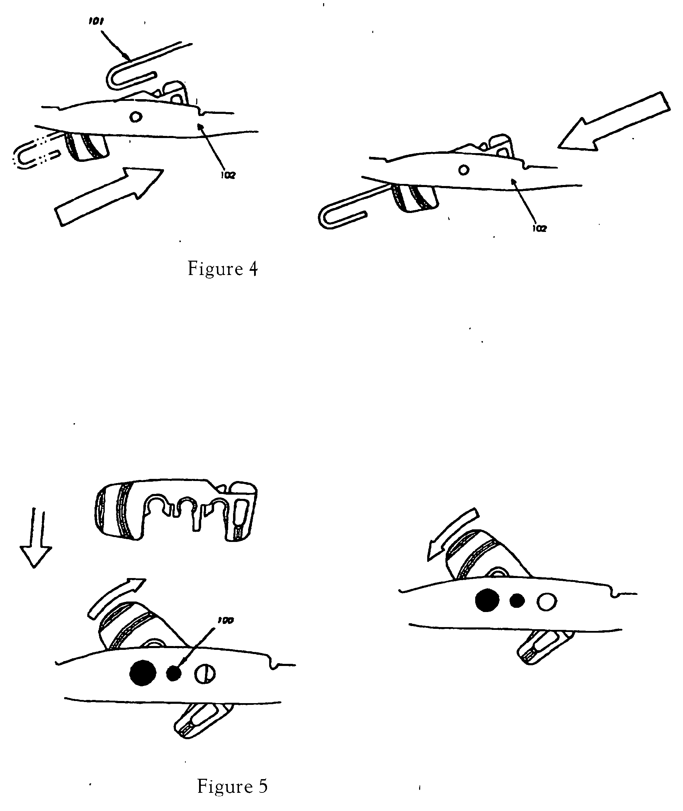

Figure 4 shows the assembly of the arm end hook (9x4, 9x3 or 8x3) to the coupling element, made by means of a small rotation of the coupling element, positioning the wiper in such a way that the arm 101 end hook is set inside the main arc of the wiper 102 and pushing the wiper against the arm 101 end hook in the direction of the locking of the arm 101 against the coupling element. In order to undo the coupling of the arm 101 end hook, the wiper is rotated in relation to the arm, a gentle pressure is applied to open the bulges 12 and 13 and the wiper is moved in the opposite direction of the one indicated for the assembly process.

When the side-lock system is used (Figure 5) locking of the coupling element onto the wiper is required before it is fixed on the tip of the windscreen wiper arm. That is done fixing said coupling element to the wiper's central pin 100 through its central bore 3; rotating the coupling element in the direction that liberates the lateral access to the side-lock hole to be used. The side-lock pin is then positioned on its corresponding hole (1/4 (6,35 mm) or 3/16 (4,76 mm)) of the wiper, rotating and pushing the coupling element against the lateral pin set, until it locks on the corresponding hole 2 or 4.

The disassembly of the side-lock system is done pulling the coupling element on the opposite direction of the one used on the assembly process, until it unlocks, and then the side-lock pin is pulled out.

The present invention offers multiple advantages compared to the current state of the art. The most immediate is the effective standardization obtained by the arm coupling elements for windscreen wipers, simplifying logistics, reducing the required stocks and the manufacturing costs.

A feature of the embodiment described above is that the shape of the arm coupling elements for windscreen wipers ensures an easy assembly of the wiper on the arm, no longer requiring the use of force to couple the system's components and thus eliminating the risk of distortions that could harm the system's performance.

Another feature of the described embodiment is that the presence of lateral chamfers on the holes 2 and 4 makes the assembly of the side-lock system easy, so that the user himself can both assemble and disassemble it with no trouble at all.

Another feature of the described embodiment when compared to the current state of the art, for example as disclosed in the applicant's Brazilian Patent Application MU 8000354-0, is the elimination of any coupling parts that interfere with the rotation movement of the wiper's arc, favoring the system's performance.

Finally, the presence of the protuberances 10 and 11 adjacent to the central hole 3 makes the assembly of the coupling element on the wiper's central pin easy.

## Claims

1. Windscreen wiper arm coupling element, comprising a main body (1), a plurality of transversal coupling bores (2, 3 and 4) of different dimensions on a central area of said main body (1) wherein a lower part of each lateral wall of the body is cut away allowing direct access to said transversal coupling bores (2, 3 and 4), four lateral bulges (5 and 6) located one at each end of each of said lateral walls and two moving locking bulges (12, 13) located at one end of the main body (1) for receiving a windscreen wiper's arm hook (101) in use, **characterised in that** said plurality of transversal coupling bores comprises three bores, **in that** two flexible adjusting pawls (7, 8) are located transversely on an upper part of the main body (1), **in that** a slack reducing moving part (9) is located at said one end of the main body (1) for reducing slack between the windscreen wiper's arm hook and the rest of said element in use and **in that** two transversal slots (10, 11) are provided adjacent to a central one of said bores.

## Patentansprüche

1. Scheibenwischerarm-Kupplungselement, umfassend einen Hauptkörper (1), eine Mehrzahl von quer liegenden Kupplungsbohrungen (2, 3 und 4) unterschiedlicher Abmessungen auf einem zentralen Bereich des Hauptkörpers (1), wobei ein unterer Teil jeder seitlichen Wand des Körpers weggeschnitten ist, um den direkten Zugriff zu den quer liegenden Kupplungsbohrungen (2, 3 und 4) zu gestatten, vier seitliche Buckel (5 und 6), von denen je eine an jedem Ende jeder der seitlichen Wände angeordnet ist, und zwei bewegliche Verriegelungsbuckel (12, 13), welche an einem Ende des Hauptkörpers (1) angeordnet sind, zum Aufnehmen eines Armhakens (101) des Scheibenwischers im Einsatzfall, **dadurch gekennzeichnet, dass** besagte Mehrzahl von quer liegenden Kupplungsbohrungen drei besagte Bohrungen umfasst, dass zwei flexible Anpassungsklinken (7, 8) quer liegend auf einem oberen Teil des Hauptkörpers (1) angeordnet sind, dass ein Spiel verringernder beweglicher Teil (9) an dem einen Ende des Hauptkörpers (1) angeordnet ist zum Verringern des Spiels zwischen dem Armhaken des Scheibenwischers und dem Rest des Elements im Einsatzfall und dass zwei Querschlitze (10, 11) benachbart zu einer zentralen der Bohrungen vorgesehen sind.

## Revendications

1. Elément de liaison de bras d'essuie-glace de pare-brise, comprenant un corps principal (1), de multiples trous de liaison transversaux (2, 3 et 4) de dimensions différentes sur une zone centrale dudit corps principal (1), une portion inférieure de chaque paroi latérale du corps comportant une découpe pour permettre un accès direct auxdits trous de liaison transversaux (2, 3 et 4), quatre parties saillantes latérales (5 et 6) respectivement situées à chaque extrémité de chacune desdites parois latérales, et deux parties saillantes de blocage mobiles (12, 13) situées au niveau de l'une des extrémités du corps principal (1) pour, en service, recevoir un crochet de bras (101) de l'essuie-glace de pare-brise, **caractérisé en ce que** lesdits multiples trous de liaison transversaux sont au nombre de trois, **en ce que** deux doigts d'ajustement flexibles (7, 8) sont positionnés transversalement sur une portion supérieure du corps principal (1), **en ce qu'**une partie mobile de réduction de jeu (9) est positionnée au niveau de ladite extrémité du corps principal (1) pour, en service, réduire un jeu entre le crochet de bras de l'essuie-glace de pare-brise et le reste dudit élément, et **en ce que** deux fentes transversales (10, 11) sont disposées de manière adjacente au.trou central.
